# DEMANDE DE BREVET EUROPEEN

(11) **EP 2 101 202 A1**
(43) Date de publication de la demande: **16.09.2009**
(21) Numéro de dépôt: 08102460.6
(22) Date de dépôt: 10.03.2008
(51) Int. Cl.: G02B 6/00, F21S 8/10, B62J 6/04

(54) **Dispositif de signalisation lumineuse pour cycle**

(71) Demandeur: Basta France, 58500 Clamecy (FR)
(72) Inventeur: Mosset, Bernard, 58210 Varzy (FR)
(74) Mandataire: Tetaz, Franck Claude Edouard

(57) **Abrégé**

L'invention concerne un guide de lumière (2) en forme de barreau, comprenant une face (27) d'entrée de lumière, une surface (21) de sortie de lumière et une surface (20) dite de réflexion apte à dévier la lumière incidente vers la surface (22) de sortie de lumière. Le guide de lumière (2) comprend, sur la surface (22) de sortie de lumière, au moins un moyen (24) pour émettre une intensité lumineuse supérieure dans une direction (D) déterminée.

L'invention concerne également un dispositif (1) pour la signalisation lumineuse d'un cycle (10), comprenant au moins une source lumineuse (3) et le guide de lumière (2) conforme à l'invention, de telle sorte que la source lumineuse (3) est située sur la face (27) d'entrée de lumière du guide (2).

## Description

### DOMAINE DE L'INVENTION

La présente invention concerne un dispositif de signalisation lumineuse pour cycle, comprenant un guide de lumière et au moins une source lumineuse.

### ARRIERE PLAN DE L'INVENTION

Le guide de lumière est une solution apparue récemment sur le marché pour signaler notamment les véhicules automobiles. Par rapport aux éclairages traditionnels, les guides de lumière présentent l'avantage de permettre de former un ruban de lumière continu, ce qui donne au véhicule une signature reconnaissable même dans l'obscurité.

De tels guides de lumière font déjà l'objet de brevets pour une application aux feux de signalisation arrière d'une automobile.

Ainsi, le brevet EP 0 933 587 décrit un guide de lumière en forme de barreau, comprenant une surface de sortie de lumière et une surface de réflexion de la lumière. Le principe de fonctionnement est le suivant : une source lumineuse est disposée à l'une de ses extrémités, ou face d'entrée de lumière. La lumière arrivant avec une incidence oblique sur la surface de sortie de lumière, qui est lisse, se réfléchit sur celle-ci et se propage donc à l'intérieur du guide. En revanche, une autre partie de la lumière se réfléchit sur une surface dite de réflexion constituée d'une pluralité de prismes et sort par la surface de sortie de lumière opposée qui est sensiblement perpendiculaire à l'orientation des rayons déviés.

L'application d'un tel système à un feu arrière de bicyclette impose des contraintes particulières liées au respect de certains règlements nationaux en Europe : la signalisation doit présenter des niveaux minimum d'intensité lumineuse suivant les différents angles de vision dans les plans horizontal et vertical.

L'obtention des valeurs minimales d'intensité lumineuse conformes aux exigences réglementaires peut être assurée au travers des surfaces réfléchissantes qui, suivant leur dimensionnement, orientation et position, dosent la quantité de lumière envoyée dans toutes les directions. C'est ce qui est fait dans l'application automobile où l'énergie disponible permet d'atteindre les minima requis, quitte à les dépasser largement par endroit.

Or une autre contrainte importante liée à l'application à une signalisation de cycle est que la consommation d'énergie nécessaire à la signalisation est significative par rapport à l'énergie disponible. Le feu de signalisation arrière des bicyclettes étant alimenté par piles ou par dynamo il est donc nécessaire d'exploiter la puissance lumineuse de la manière la plus efficace possible et ainsi de minimiser la puissance nécessaire, afin d'avoir la durée de vie des piles la plus longue possible ou bien, si l'énergie provient d'une dynamo, de minimiser l'énergie à fournir par le cycliste pour alimenter son feu de signalisation.

L'un des buts de l'invention est de proposer un dispositif de signalisation lumineuse d'un cycle comprenant un guide de lumière optimisé dans lequel on met en oeuvre une puissance lumineuse minimale tout en assurant une intensité lumineuse suffisamment intense dans certaines directions privilégiées.

### BREVE DESCRIPTION DE L'INVENTION

Un premier objet de l'invention concerne un guide de lumière en forme de barreau, comprenant une face d'entrée de lumière, une surface de sortie de lumière et une surface dite de réflexion apte à dévier la lumière incidente vers la surface de sortie de lumière, ledit guide comprenant, sur la surface de sortie de lumière, au moins un moyen pour émettre une intensité lumineuse supérieure dans une direction déterminée.

Ledit moyen comprend avantageusement une facette dont la surface présente une discontinuité par rapport à la surface de sortie de lumière, de manière à laisser sortir un faisceau lumineux dans ladite direction déterminée.

Ladite facette peut être en relief ou en creux par rapport à la surface de sortie de lumière.

Selon un premier mode de réalisation, la section du guide est circulaire ou elliptique.

Selon une variante de l'invention, la section du guide est telle que la surface de sortie de lumière est plane et perpendiculaire à l'axe de déviation de la lumière par la surface de réflexion.

Un autre objet de l'invention concerne un dispositif pour la signalisation lumineuse d'un cycle, comprenant au moins une source lumineuse, et un guide de lumière tel que décrit précédemment, agencé de telle sorte que la source lumineuse est située sur la face d'entrée de lumière du guide.

La source lumineuse est de préférence une diode électroluminescente.

Selon un mode particulier de réalisation, le guide de lumière présente deux branches symétriques et la source lumineuse est disposée à la jonction desdites branches.

Selon un autre mode de réalisation, la face opposée à la face d'entrée de lumière présente une forme apte à réfléchir la lumière envoyée par la source lumineuse.

De préférence, la lumière entre dans le guide par un méplat sur la face d'entrée de lumière.

De manière particulièrement avantageuse, le dispositif comprend un élément réfléchissant agencé parallèlement au guide de lumière, en vis-à-vis de la surface de réflexion.

### BREVE DESCRIPTION DES DESSINS

D'autres caractéristiques et avantages de l'invention ressortiront de la description détaillée qui va suivre, en référence aux dessins annexés sur lesquels :
- la figure 1 illustre le fonctionnement du guide de lumière,
- les figures 2 et 3 illustrent deux sections préférées du guide de lumière,
- les figures 4 et 5 illustrent deux modes de réalisation des facettes conformes à l'invention,
- les figures 6 et 7 illustrent respectivement la transmission et la réflexion d'un rayon incident sur une facette ;
- la figure 8 présente des vues schématiques de dessus et de côté d'un cycle,
- la figure 9 illustre un premier arrangement du dispositif de signalisation conforme à l'invention,
- la figure 10 illustre un autre arrangement du dispositif,
- les figures 11 et 12 illustrent des détails de l'extrémité du guide de lumière conforme à l'invention ;
- la figure 13 est une vue en perspective d'un exemple de guide de lumière ;
- la figure 14 présente une vue de côté et une vue en coupe du guide de lumière présenté à la figure 13.

### DESCRIPTION DETAILLEE DE L'INVENTION

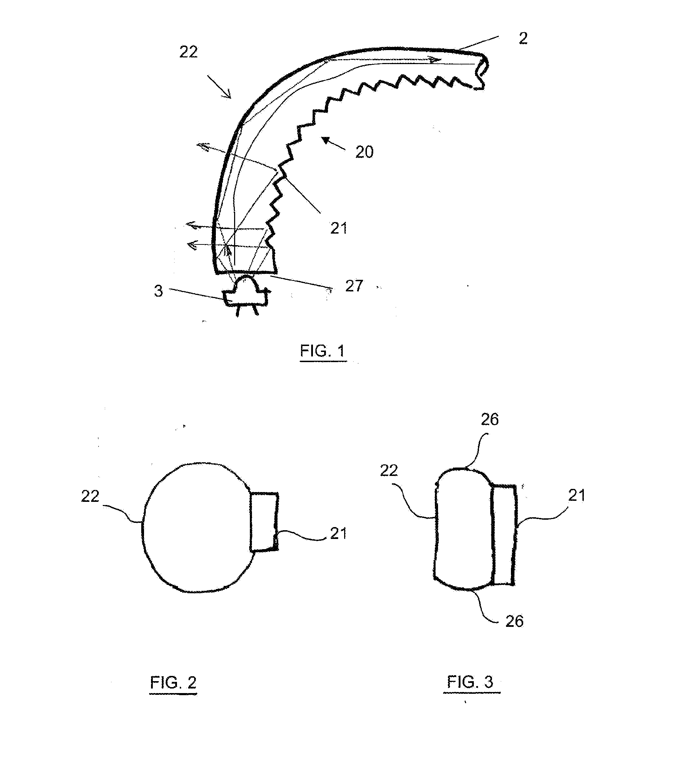

En référence à la figure 1, le guide de lumière 2 se présente sous la forme d'un barreau rectiligne ou courbe, comprenant à l'une et/ou l'autre de ses extrémités une face 27 d'entrée de lumière, éclairée par une source lumineuse.

Le barreau est dans un matériau transparent, tel que du verre ou tout matériau thermoplastique transparent. Parmi les matériaux appropriés, on peut citer par exemple le polyméthacrylate de méthyle (PMMA).

Dans le cas d'un barreau courbe, la génératrice 23 du barreau décrit une courbe dont le rayon de courbure est suffisamment grand pour que les rayons lumineux circulant à l'intérieur du guide se réfléchissent sur sa paroi. Le trajet des rayons lumineux est illustré par des flèches.

On précise que le guide de lumière n'est pas nécessairement constitué d'un unique barreau continu mais peut, comme on le verra plus bas, être constitué de plusieurs branches en forme de barreaux.

Le guide de lumière présente par ailleurs sur un secteur de sa paroi parallèle à la génératrice une succession de surfaces 21 (telles que des facettes planes prismatiques par exemple) d'une orientation telle qu'elles renvoient une partie de la lumière à l'extérieur du guide de lumière.

Le secteur comprenant les prismes 21 est appelé surface 20 de réflexion de lumière, tandis que la surface 22 opposée est appelée surface de sortie de lumière.

La section du guide autour de la génératrice 23 évolue donc selon les découpes faites dans le barreau pour aménager les prismes 21.

Selon un premier mode de réalisation, la section du guide 2 est sensiblement circulaire ou elliptique. Cette forme arrondie, présentée à la figure 2, présente l'avantage de favoriser la réflexion interne des rayons lumineux et d'optimiser la fonction de guidage de la lumière.

Selon un autre mode de réalisation particulièrement avantageux, le guide peut avoir une section circulaire tronquée. En référence à la figure 3, la surface 22 de sortie de lumière est de préférence plane et perpendiculaire à l'axe selon lequel les prismes 21 dévient la lumière, ce qui permet d'éviter la réflexion des rayons en provenance des prismes et de permettre une sortie optimale de la lumière. Par ailleurs, les surfaces 26 reliant la surface de sortie de lumière 22 et la surface de réflexion 20 sont quant à elle arrondies, pour faciliter la réflexion interne des rayons lumineux et préserver une fonction de guidage satisfaisante.

Si le barreau est rectiligne, la surface 20 de réflexion de la lumière se rapproche progressivement de l'axe du guide au fur et à mesure de l'éloignement de la face 27 d'entrée de lumière, afin de favoriser une plus grande uniformité de la sortie de lumière.

Par rapport aux guides de lumière connus dans le domaine automobile, une meilleure efficience dans l'exploitation de la lumière peut être obtenue en complétant ponctuellement l'éclairage obtenu au travers des prismes réfléchissants, en intégrant au guide de lumière au moins un moyen permettant d'obtenir une intensité lumineuse plus importante dans une direction déterminée.

De manière particulièrement avantageuse, ledit moyen comprend une facette, dont la surface présente une discontinuité avec la surface de sortie de la lumière. Par discontinuité, on entend qu'aux points de raccordement entre la facette et la surface de sortie de lumière, le plan tangent à la facette et le plan tangent à la surface de sortie de lumière ne sont pas confondus.

Cette facette est située sur la surface de sortie de lumière 22 et laisse ponctuellement sortir la lumière dans la direction souhaitée.

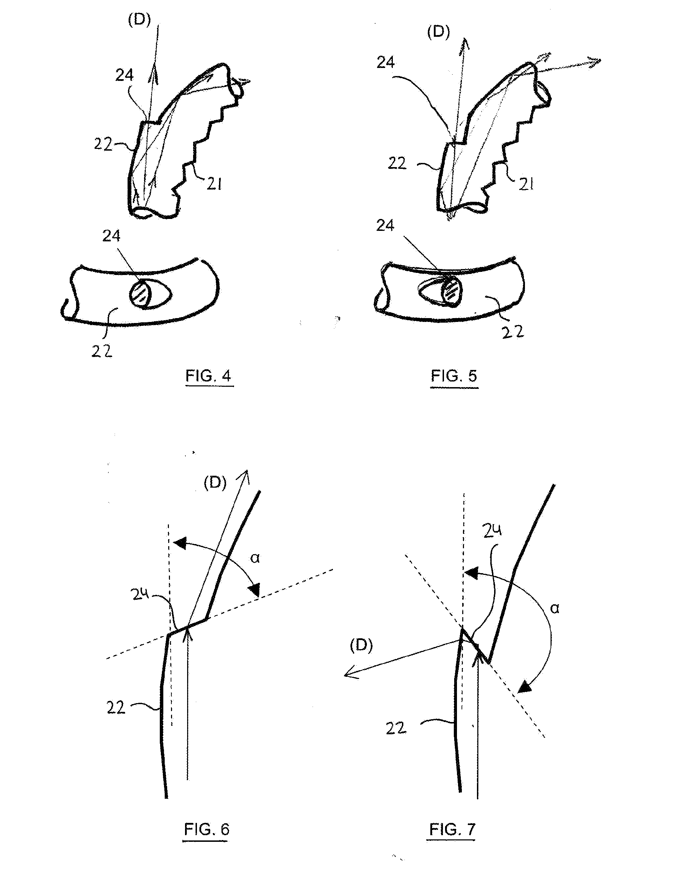

Une telle facette 24 est illustrée aux figures 4 et 5.

La position et l'orientation de la facette 24 sont déterminées de sorte à laisser sortir, dans la direction D voulue, les rayons lumineux incidents sur la facette.

La surface de la facette pourra être plane, ou bien galbée à condition que la courbure soit suffisamment grande pour ne pas générer de réflexion de la lumière incidente. Une surface galbée (sphérique par exemple) présentera l'avantage de distribuer la lumière sur une plus grande ouverture et évitera donc un effet de concentration ponctuelle.

Selon sa position sur le guide de lumière, la facette peut être inclinée de façon à laisser sortir directement les rayons lumineux, ou bien les réfléchir.

En référence à la figure 6, si la facette est inclinée d'un angle α compris entre 45 et 135° par rapport à la direction d'un rayon incident, on observe un phénomène de transmission du rayon.

Si par contre la facette est inclinée d'un angle α supérieur à 135° par rapport à la direction du rayon incident, on observera une réflexion de ce rayon, comme cela est illustré sur la figure 7.

La facette 24 pourra être réalisée en relief (comme sur la figure 4) ou en creux (comme sur la figure 5) par rapport à la surface 22 de sortie de lumière.

On peut placer les facettes aux endroits appropriés sur la surface de sortie de lumière du guide en fonction de la réglementation à respecter, de manière à obtenir une intensité lumineuse plus importante dans la direction souhaitée. La détermination de la position et de l'orientation des facettes en fonction du résultat recherché est à la portée de l'homme du métier ayant des connaissances en optique.

Dans le cas de l'application à un dispositif de signalisation arrière d'un cycle, le guide de lumière est positionné dans un plan horizontal, la surface 22 de sortie de lumière étant orientée vers l'arrière du cycle de manière à être visible.

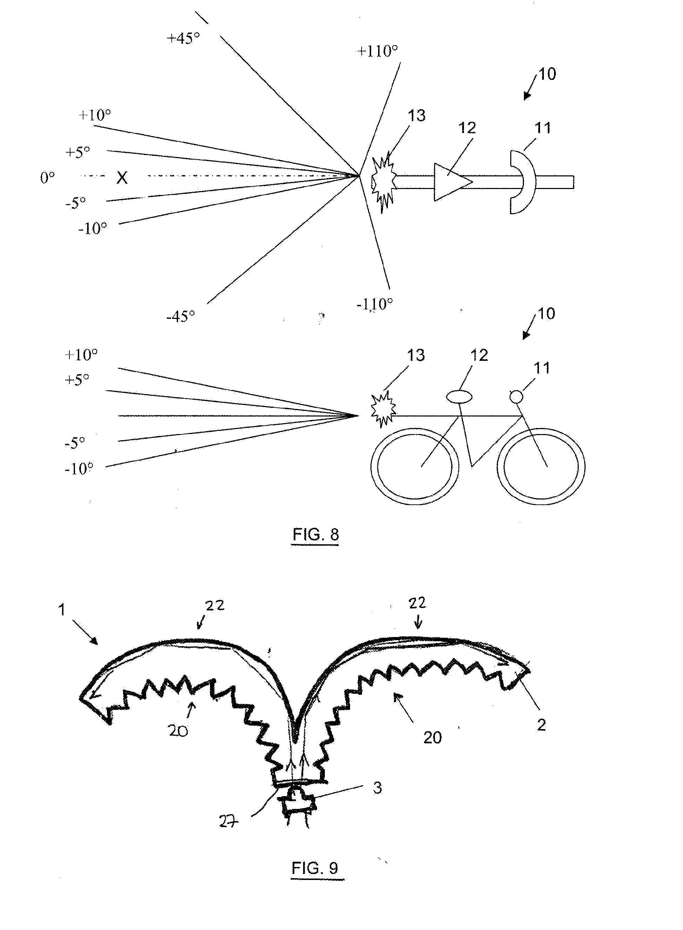

La figure 8 illustre des exemples d'angles de vision selon lesquels l'intensité lumineuse est mesurée.

Dans sa partie supérieure, la figure 8 illustre en vue de dessus un cycle 10 d'axe longitudinal X, son guidon 11, sa selle 12 et son feu de signalisation arrière 13. A titre d'exemple, l'intensité lumineuse mesurée à une distance donnée dans un plan horizontal doit être au minimum de 2,5 candélas dans l'axe X du cycle (c'est-à-dire pour une orientation de 0°), de 1 candéla pour une orientation comprise entre 0 et 5° par rapport à l'axe X, de 0,33 candéla entre 5 et 10°, de 0,1 candéla entre 10 et 45° et de 0,033 candéla entre 45 et 110°.

La partie inférieure de la figure 8 illustre la même bicyclette 10 en vue de côté. L'intensité lumineuse doit présenter des valeurs minimales mesurées à une distance donnée dans des plans inclinés de -10°, -5°, 5° et 10° par rapport au plan horizontal.

Les facettes conformes à l'invention permettent de respecter ces exigences avec des sources lumineuses adaptées à un usage sur cycle, c'est-à-dire sans consommer d'énergie supplémentaire par rapport aux éclairages de vélo classiques.

La règlementation imposant de rendre le feu visible de part et d'autre de l'axe du vélo (par exemple à + ou - 110°) on pourra implanter un guide permettant de diviser la lumière de part et d'autre de la source lumineuse 3, comme illustré sur la figure 9. Le guide de lumière 2 comporte alors deux branches symétriques par rapport à l'axe du cycle.

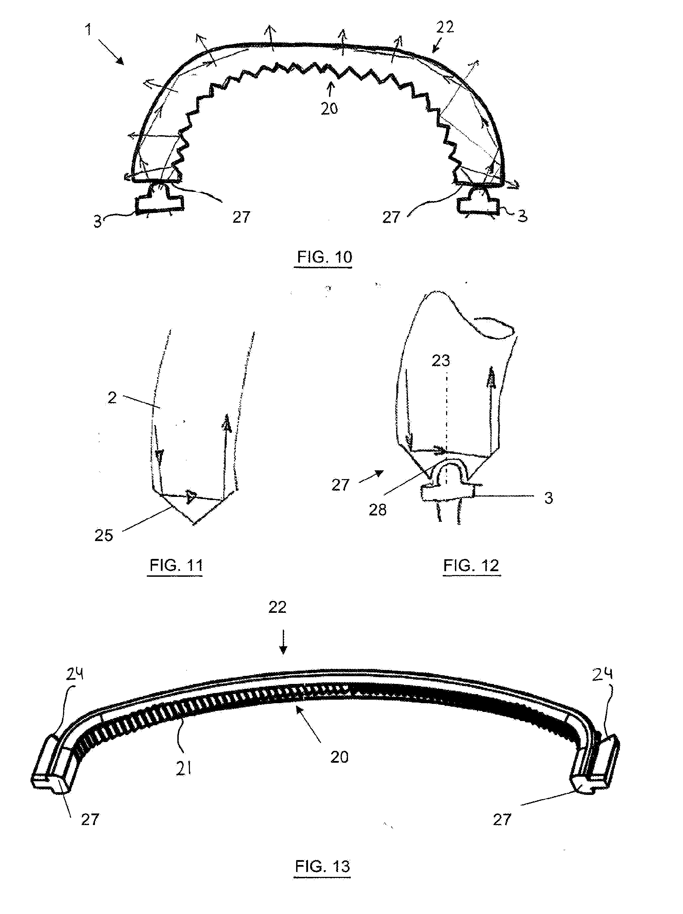

Une autre possibilité est d'utiliser un dispositif à deux sources lumineuses 3 symétriques par rapport à l'axe du vélo, chacune des sources ne traitant qu'un des deux côtés du guide de lumière 2. Ce deuxième arrangement est illustré par la figure 10.

Sur les figures 9 et 10, les facettes faisant l'objet de l'invention ne sont pas représentées, étant entendu que leur nombre et leur positionnement sur la surface de sortie de lumière 22 dépendent du cahier des charges à respecter.

La ou les sources lumineuses sont avantageusement des diodes électroluminescentes (DEL) alimentées par des piles ou par une dynamo.

Toujours dans le but d'utiliser le plus efficacement possible la source lumineuse, on pourra, en référence à la figure 11, terminer le guide de lumière par une forme - par exemple un cône 25 de révolution d'angle de l'ordre de 45° - permettant à la lumière de se réfléchir au fond du guide et de repartir en sens inverse dans le guide.

Dans le cas d'un guide de lumière intégrant une source lumineuse à chacune de ses extrémités, tel qu'illustré à la figure 10 par exemple, les faces 27 d'entrée de lumière situées à chaque extrémité se présenteront comme des cônes intégrant une forme destinée à laisser rentrer la lumière émise par chaque source. En référence à la figure 12, cette forme sera par exemple un méplat 28 perpendiculaire à l'axe 23 du guide, positionné à la pointe du cône 25 ou à tout autre endroit de la section du guide. Le méplat pourra être en creux ou en relief par rapport au cône.

Le méplat pourra avantageusement être entouré d'un rebord destiné à positionner la source lumineuse.

Enfin, toujours dans le but d'utiliser le plus efficacement possible la source lumineuse, on pourra disposer derrière le guide de lumière un élément réfléchissant (tel qu'un miroir obtenu par métallisation par exemple) de manière à récupérer la lumière éventuellement perdue par le guide de lumière et de la renvoyer à l'extérieur du feu c'est-à-dire vers l'arrière du vélo. A cet effet, l'élément réfléchissant est disposé parallèlement au guide de lumière, la surface réfléchissante étant située en vis-à-vis de la surface de réflexion de lumière.

### Exemple de réalisation

La figure 13 illustre un exemple de guide de lumière configuré pour renvoyer une intensité lumineuse dans une direction D à 110° par rapport à l'axe du cycle.

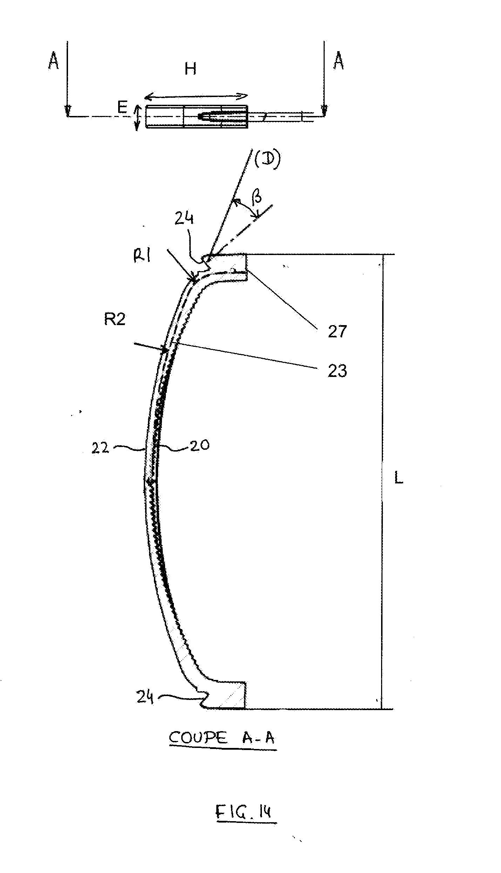

En référence à la figure 14, qui représente une vue en coupe de ce guide de lumière, deux facettes 24 sont agencées de manière symétrique. Pour obtenir une sortie plus importante de lumière à 110°, la normale (représentée en trait mixte) à chaque facette 24 est orientée d'un angle β de 27° par rapport à la direction D.

Dans cet exemple, le guide de lumière présente une longueur L de l'ordre de 127 mm, une hauteur H de 28 mm et une épaisseur E de 6 mm.

Les rayons de courbure R1 et R2 de la génératrice 23 valent respectivement 10 et 136 mm.

## Revendications

1. Guide de lumière (2) en forme de barreau, comprenant une face (27) d'entrée de lumière, une surface (21) de sortie de lumière et une surface (20) dite de réflexion apte à dévier la lumière incidente vers la surface (22) de sortie de lumière, **caractérisé en ce qu'**il comprend, sur la surface (22) de sortie de lumière, au moins un moyen (24) pour émettre une intensité lumineuse supérieure dans une direction (D) déterminée.

2. Guide de lumière selon la revendication 1, **caractérisé en ce que** ledit moyen comprend une facette (24) dont la surface présente une discontinuité par rapport à la surface de sortie de lumière (22) de manière à laisser sortir un faisceau lumineux dans ladite direction (D) déterminée.

3. Guide de lumière selon la revendication 2, **caractérisé en ce que** ladite facette (24) est en relief par rapport à la surface (22) de sortie de lumière.

4. Guide de lumière selon la revendication 2, **caractérisé en ce que** ladite facette (24) est en creux par rapport à la surface (22) de sortie de lumière.

5. Guide de lumière selon l'une des revendications 1 à 4, **caractérisé en ce que** la section du guide (2) est circulaire ou elliptique.

6. Guide de lumière selon l'une des revendications 1 à 4, **caractérisé en ce que** la section du guide (2) est telle que la surface (22) de sortie de lumière est plane et perpendiculaire à l'axe de déviation de la lumière par la surface (20) de réflexion.

7. Dispositif (1) pour la signalisation lumineuse d'un cycle (10), comprenant au moins une source lumineuse (3), **caractérisé en ce qu'**il comprend un guide de lumière (2) selon l'une des revendications précédentes, de telle sorte que la source lumineuse (3) est située sur la face (27) d'entrée de lumière du guide (2).

8. Dispositif selon la revendication 7, **caractérisé en ce que** la source lumineuse (3) est une diode électroluminescente.

9. Dispositif selon l'une des revendications 7 ou 8, **caractérisé en ce que** le guide de lumière (2) présente deux branches symétriques et **en ce que** la source lumineuse (3) est disposée à la jonction desdites branches.

10. Dispositif selon l'une des revendications 7 ou 8, **caractérisé en ce que** la face opposée à la face (27) d'entrée de lumière présente une forme (25) apte à réfléchir la lumière envoyée par la source lumineuse.

11. Dispositif selon la revendication 10, **caractérisé en ce que** la lumière entre dans le guide (2) par un méplat (28) sur la face (27).

12. Dispositif selon l'une des revendications 7 à 11, **caractérisé en ce qu'**il comprend un élément réfléchissant agencé parallèlement au guide de lumière (2), en vis-à-vis de la surface (20) de réflexion.
